# EUROPEAN PATENT SPECIFICATION

(11) **EP 0 883 666 B1**
(45) Date of publication and mention of the grant of the patent: **02.02.2011**
(21) Application number: 96944780.4
(22) Date of filing: 19.12.1996
(51) Int. Cl.: C10M 105/38, C10M 171/00, C09K 5/04

(54) **USE OF POLYOL ESTER LUBRICANTS TO MINIMIZE WEAR ON ALUMINUM PARTS IN REFRIGERATION EQUIPMENT**
VERWENDUNG VON SCHMIERMITTELN AUF POLYOLESTERBASIS ZUR MINIMIERUNG DES VERSCHLEISSES VON ALUMINIUMTEILEN IN KUEHLEINRICHTUNGEN
UTILISATION DE LUBRIFIANTS D'ESTER DE POLYOL AFIN DE LIMITER L'USURE DE PIECES EN ALUMINIUM DANS DES INSTALLATIONS DE REFRIGERATION

(30) Priority: 22.12.1995 US 9095 P; 13.12.1996 US 768016
(43) Date of publication of application: 16.12.1998
(73) Proprietor: Cognis IP Management GmbH, 40589 Düsseldorf (DE)
(72) Inventor: SCHNUR, Nicholas, E., Cincinnati, OH 45238 (US)
(86) International application number: PCT/US1996/019604
(87) International publication number: WO 1997/023585

(56) References cited:
- WO-A-93/24585
- WO-A-93/24597
- WO-A-93/25629
- US-A- 3 562 300
- US-A- 4 826 633
- US-A- 5 185 092
- US-A- 5 211 884
- US-A- 5 503 761
- US-A- 5 554 311

## Description

### BACKGROUND OF THE INVENTION

### Field of the Invention

This invention relates to polyol ester lubricant base stocks, which can also serve as complete lubricants in some cases, refrigerant working fluids including such lubricant base stocks or complete lubricants along with primary heat transfer fluids, as well as methods for using these materials in refrigeration equipment to reduce wearing of aluminum parts in such equipment. The lubricants and lubricant base stocks are generally suitable for use with most or all halocarbon refrigerants and are particularly suitable for use with substantially chlorine-free, fluoro-group containing heat transfer fluids particularly chlorine-free heat transfer fluids such as pentafluoroethane, 1,1-difluoroethane, 1,1,1-trifluoroethane, difluoromethane and 1,1,1,2-tetrafluoroethane.

### STATE OF RELATED ART

Chlorine-free heat transfer fluids are desirable for use in refrigeration and air conditioning systems, because their escape into the atmosphere causes less damage to the environment than the currently most commonly used chlorofluorocarbon heat transfer fluids, such as trichlorofluoromethane and dichlorodifluoromethane. The widespread commercial use of chlorine-free refrigerant heat transfer fluids has been hindered, however, by the lack of commercially adequate lubricants. This is particularly true for one of the leading environmentally acceptable heat transfer fluids, 1,1,1,2-tetrafluoroethane, commonly known in the art as "Refrigerant 134a" or simply "R134a". Other fluoro-substituted alkanes are also effective heat transfer fluids.

Lubricants used in certain types of refrigeration equipment are intended to protect against the wearing of internal aluminum surfaces in refrigeration equipment. Such surfaces tend to become worn from exposure to constant contact with lubricant and lubricant/refrigerant working fluids in the operation most particularly of compressors forming part of the equipment. Such wear results in the creation of aluminum particles that may clog the compressor and are unacceptable commercially. In addition, the aluminum surfaces may in time become so worn as to interfere with the proper functioning of the equipment.

Such lubricants must also not be corrosive to the refrigerating machinery and must not chemically react with the refrigerant over a wide temperature range. Even in low power compressors, a certain minimum viscosity is required to avoid excessive depletion of the lubricant from those surfaces of refrigeration machinery that need lubrication during operation, but are not immersed in the refrigerant working fluid, e.g., during periods in which the compressor and other moving parts of the refrigeration system are idle.

Mutual miscibility between the refrigerant and lubricant of the refrigerant working fluid is also very important, as the lubricant should not separate from the refrigerant at high or low temperatures. If the miscibility between the lubricant and refrigerant is low, moving parts of the refrigeration system may seize as a result of inadequate lubrication.

Accordingly, it is an object of the present invention to provide a lubricating oil for a chlorine-free refrigerant, and in particular 1,1,1,2-tetrafluoroethane refrigerant that minimizes wear on internal aluminum surfaces in refrigeration equipment. Another object of the invention is to provide a lubricating oil that is miscible, and otherwise compatible, with the refrigerant over a wide temperature range. A further object of the invention is to provide a lubricant having a controlled range of viscosity values, as well as satisfactory hydrolytic stability and very low concentration of unreacted acid.

WO 9324585, WO 9324597 and WO 9325629 disclose ester refrigerant lubricants for use with chlorine-free hydrofluorocarbon refrigerants and working fluids comprising these ester lubricants and refrigerants.

US-A-5,185,092 discloses ester-based lubricating oils for refrigerators using 1,1,1,2-tetrafluoroethane refrigerant. An anti-wear effect on iron or aluminum is achieved by addition of a sulfur-type anti-wear agent.

### SUMMARY OF THE INVENTION

It has now been found that high quality ester lubricants can be obtained which alleviate the wearing of aluminum surfaces within refrigeration equipment, which have the required viscosity grades and which are highly miscible with chlorine-free fluoro-group containing heat transfer fluids particularly chlorine-free heat transfer fluids such as pentafluoroethane, 1,1 difluoroethane, 1,1,1-trifluoroethane, difluoromethane and 1,1,1,2-tetrafluoroethane and mixtures thereof over a wide temperature range. These esters also have satisfactory hydrolytic stability and low concentrations of free acid.

The lubricant composition used in the present invention consists essentially of an ester blend including esters having as reactive components , at least one alcohol selected from the group consisting of pentaerythritol, dipentaerythritol and tripentaerythritol.

The above-described ester lubricant may be used as such, or, depending on the end use, may have one or more additives incorporated therein to provide a compounded lubricant. However, a further desirable feature of the invention is that the lubricant does not need to be blended with anti-wear additives to achieve good results in alleviating wearing of aluminum surfaces of refrigeration equipment exposed to the lubricant in the course of operation.

The ester lubricant used in the invention is used to particular advantage as a component of a refrigerant working fluid, together with various chlorine-free, fluoro-group containing heat transfer fluids, especially 1,1,1,2-tetrafluoroethane (R-134a).

The refrigerant working fluids of the invention produce very good.results in practice in operating a refrigerator comprising cyclic compression, liquefaction, expansion and evaporation of a heat transfer fluid.

In particular, the invention is directed to a method of alleviating wear on aluminum surfaces in refrigeration equipment during the operation of the refrigeration equipment which comprises contacting the equipment with a lubricant composition that is not blended with anti-wear additives, said lubricant composition comprising an ester formed from at least one alcohol selected from the group consisting of monopentaerythritol, dipentaerythritol and tripentaerythritol and a carboxylic acid mixture comprising, in percent by weight, 40-60 percent isononanoic acid and 40-60 percent of a source of pentanoic acid selected from the group consisting of 2-methylbutanoic acid, 3-methylbutanoic acid and n-pentanoic acid.

Preferred embodiments will become evident from the dependent claims.

### DETAILED DESCRIPTION OF THE INVENTION

For each of the esters which form the lubricant composition used in the invention, it is possible to obtain the same esters by reacting acid derivatives such as acid anhydrides, acyl chlorides, and esters of the acids instead of reacting the acids themselves. The acids are generally preferred for economy and are exemplified herein, but it is to be understood that the esters defined herein by their reactive components with acids can be equally well obtained by reaction of alcohols with the corresponding acid derivatives. The term "source of isononanoic acid" as used herein thus refers to the acid per se, as well as to the corresponding acid anhydride, acyl halide, and ester derivatives.

Concerning the reactive components of the esters which form the lubricant composition used in the invention, it is to be understood that although only the desired alcohols and acids are explicitly specified, some amount of the sort of impurities normally present in technical or industrial grade products may be tolerable in most cases. For example, "tech pentaerythritol" (PE) normally contains on the order of 85-90 weight % of mono PE, along with 10-15 weight % of di-pentaerythritol ("DPE") and 0-3% of tripentaerythritol ("TPE"), and is quite satisfactory for making high quality esters in many cases. Also, "commercial isopentanoic acid" normally contains 65 weight % n-pentanoic acid and 35 weight % of isopentanoic acids selected from the group consisting of 2-methylbutanoic acid and 3-methylbutanoic acid.

In practice, it has been found that reaction between the alcohol(s) and the acid(s) reactants of the respective esters proceeds more effectively if the quantity of acid charged to the reaction mixture initially is enough to provide an excess of 10-25% of equivalents of acid over the equivalents of alcohol reacted with the acid. (An equivalent of acid is defined for the purposes of this description as the amount containing one gram equivalent weight of carboxyl groups, whereas an equivalent of alcohol is the amount containing one gram equivalent weight of hydroxyl groups.) The composition of the mixture of acids and alcohols that have actually reacted can be determined by analysis of the ester product for its acyl group content.

In making the ester product, the acid reacted will be lower boiling than the alcohol(s) reacted and the product ester(s). When this condition obtains, it is preferred to remove the bulk of any excess acid remaining at the end of the esterification reaction by distillation, most preferably at a low pressure such as 133 - 667 Pa (1-5 torr).

After such vacuum distillation, the product is often ready for use as a lubricant blending stock according to this invention. If further refinement of the products is desired, the content of free acid in the product after the first vacuum distillation may be further reduced by treatment with epoxy esters, as taught in U.S. -A- 3,485,754 or by neutralization with any suitable alkaline material such as lime, alkali metal hydroxides, or alkali metal carbonates.

If treatment with epoxy esters is used, excess epoxy esters may be removed by a second distillation under very low pressure, while the product of reaction between the epoxy ester and residual acid may be left behind in the product without harm. If alkali neutralization is used as the refinement method, subsequent washing with water, to remove any unreacted excess fatty acid neutralized by the alkali, is strongly preferred before using the product in forming a lubricant ester blend.

Ester base stock used according to this invention consist essentially of an ester blend including esters formed from at least one alcohol selected from the group consisting of monopentaerythritol, dipentaerythritol and tripentaerythritol with an acid mixture comprising 40-60 weight percent of a source of pentanoic acid and 40-60 weight percent of a source of isononanoic acid. With regard to the pentanoic acid component, the ratio in weight percent of a mixture of 2-methylbutanoic acid and 3-methylbutanoic acid to n-pentanoic acid may be between 0 to 100 but is preferably between 30-40:60-70. The resulting ester has an ISO viscosity grade number of between 15 and 100, more preferably of between 22 and 46 and most preferably of 32.

Under some conditions of use, the ester base stock described herein will function satisfactorily as a complete lubricant. It is generally preferable, however, for a complete lubricant to contain other materials generally known in the art as additives, such as oxidation resistance and thermal stability improvers, corrosion inhibitors, metal deactivators, lubricity additives, viscosity index improvers, pour and/or floc point depressants, detergents, dispersants, foam promoting agents, and antifoaming agents. Many additives may function both as a metal deactivator and a corrosion inhibitor. Cumulatively, all additives preferably do not exceed 8% by weight, or more preferably do not exceed 5% by weight, of the total compounded lubricant formulation.

An effective amount of the foregoing additive types is generally in the range of 0.01 to 5% for the antioxidant compound, 0.01 to 5% for the corrosion inhibitor component, from 0.001 to 0.5% for the metal deactivator component, from 0.5 to 5% for the lubricity additives, from 0.01 to 2% for each of the viscosity index improvers and pour and/or floc point depressants, from 0.1 to 5% for each of the detergents and dispersants, and from 0.001 to 0.1% for foam promoting agents or anti-foam agents. All these percentages are by weight and are based on the total weight of the lubricant composition. It is to be understood that more or less than the stated amounts of additives may be more suitable to particular circumstances or applications, and that a single molecular type or a mixture of types may be used for each type of additive component.

The foregoing examples are intended to be merely illustrative and not limiting, except as circumscribed by the appended claims.

Examples of suitable oxidation resistance and thermal stability improvers are diphenyl-, dinaphthyland phenyl-naphtyl-amines, in which the phenyl and naphthyl groups can be substituted, e.g., N,N'-diphenyl phenylenediamine, p-octylidiphenylamine, p,p-dioctyldiphenylamine, N-phenyl-1-naphthyl amine, N-phenyl-2-naphthyl amine, N-(p-dodecyl)-phenyl-2-naphthyl amine, di-1-naphthylamine, and di-2-naphthylamine; phenothazines such as N-alkylphenothiazines; imino(-bisbenzyl); and hindered phenols such as 6-(t-butyl) phenol, 2,6-di (t-butyl) phenol, 4-methyl-2,6-di-(t-butyl) phenol, 4,4'-methylenebis(-2,6-di-(t-butyl)phenol), and the like.

Examples of suitable cuprous metal deactivators are imidazole, benzamidazole, 2-mercaptobenzthiazole, 2,5-dimercaptothiadiazole, salicylidine-propylenediamine, pyrazole, benzotriazole, tolutriazole, 2-methylbenzamidazole, 3,5-dimethyl pyrazole, and methylene bis-benzotriazole. Benzotriazole derivatives are preferred. Other examples of more general metal deactivators and/or corrosion inhibitors include organic acids and their esters, metal salts, and anhydrides, e.g., N-oleyl-sarcosine, sorbitan monooleate, lead naphthenate, dodecenyl-succinic acid and its partial esters and amides, and 4-nonylphenoxy acetic acid; primary, secondary, and tertiary aliphatic and cycloaliphatic amines and amine salts of organic and inorganic acids, e.g., oil-soluble alkylammonium carboxylates; heterocyclic nitrogen containing compounds, e.g., thiadiazoles, substituted imidazolines, and oxazolines; quinolines, quinones, and anthraquinones; propyl gallate; barium dinonyl naphthalene sulfonate; ester and amide derivatives of alkenyl succinic anhydrides or acids, dithiocarbamates, dithiophosphates, amine salts of alkyl acid phosphates and their derivatives.

Examples of suitable lubricity additives include siloxane polymers, polyoxyalkene polymers, polyalkyleneglycol and long chain derivatives of fatty acids and natural oils, such as esters, amines, amides, imidazolines, and borates.

Examples of suitable viscosity index improvers include polymethacrylates, copolymers of vinyl pyrrolidone and methacrylates, polybutenes, and styrene-acrylate copolymers.

Examples of suitable pour point and/or floc point depressants include polymethacrylates such as methacrylate-ethylene-vinyl acetate terpolymers; alkylated naphthalene derivatives, and products of Friedel-Crafts catalyzed condensation of urea with naphthalene or phenols.

Examples of suitable detergents and/or dispersants include polybutenylsuccinic acid amides; polybutenyl phosphonic acid derivatives; long chain alkyl substituted aromatic sulfonic acids and their salts; and methyl salts of alkyl sulfides, of alkyl phenols, and of condensation products of alkyl phenols and aldehydes.

Examples of suitable anti-foam agents include silicone polymers, siloxane polymers and polyoxyalkene polymers and some acrylates.

Examples of foam promoters include silicone polymers with a different molecular structure than the silicone polymers used as anti-foam agents, siloxane polymers and polyoxyalkene polymers.

Under some conditions of operation, it is believed that the presence in lubricants of the types of polyether polyols that have been prominent constituents of certain prior art lubricant base stocks reported to be useful with fluorocarbon refrigerant working fluids are less than optimally stable and or inadequately compatible with some of the most useful lubricant additives. Thus, in one embodiment of this invention, it is preferred that the lubricant base stocks and lubricant be substantially free of such polyether polyols. By "substantially free", it is meant that the compositions contain no more than about 10% by weight, preferably no more than about 2.6% by weight and more preferably no more than about 1.2% by weight of the materials noted.

In formulating a refrigerant working fluid used according to this invention, the selected heat transfer fluid and the lubricant should preferably have chemical characteristics and be present in such a proportion to each other that the working fluid remains homogeneous, i.e., free from visually detectable phase separations or turbidity, over the entire range of working temperatures to which the working fluid is exposed during operation of a refrigeration system in which the working fluid is used. This working range may vary from -60°C to as much as 175°C. It is often adequate if the working fluid remains a single phase up to +30°C, although it is increasingly more preferable if the single phase behavior is maintained up to at least 100°C. Similarly, it is often adequate if the working fluid compositions remain a single phase when chilled to 0°C, although it is increasingly more preferable if the single phase behavior persists down to -55°C. Single phase mixtures with chlorine-free fluoro-group containing heat transfer fluids can often be obtained with blended ester lubricants as described above, with the most preferred ester being most likely to give such single phase behavior over a wide temperature range.

Inasmuch.as it is often difficult to predict exactly how much lubricant will be mixed with the heat transfer fluid to form a working fluid, it is most preferable if the lubricant composition forms a single phase in all proportions with the heat transfer fluid over the temperature ranges noted above. This, however, is not a rigid requirement, and it is often sufficient if there is single phase behavior over the entire temperature range for a working fluid mixture containing up to 1% by weight of lubricant according to this invention. Single phase behavior over a temperature range for mixtures containing up to 2, 4, 10 and 15% by weight of lubricant is successively more preferable.

In some cases, single phase behavior is not required. The term "miscible" is used in the refrigeration lubricant art and hereinafter, except when part of the phrase "miscible in all proportions", when two phases are formed but are readily capable of being mixed into a uniform dispersion that remains stable as long as it is at least moderately agitated mechanically. Some refrigeration (and other) compressors are designed to operate satisfactorily with such miscible mixtures of heat transfer fluid and lubricant. In contrast, mixtures that lead to coagulation or significant thickening and form two or more phases are unacceptable commercially and are designated herein as "immiscible".

In the practice of the invention, the lubricant base stock is used in a process of operating refrigerating machinery in such a manner that the lubricant alleviates wearing of aluminum surfaces of the refrigeration machinery in contact with the lubricant alone, or combined with chlorine-free fluoro-group containing heat transfer fluids.

The operable and preferred ranges of viscosity and variation of viscosity with temperature for lubricant compositions according to this invention are generally the same as established in the art for lubricants to be used in refrigeration systems together with a heat transfer fluid, particularly for a fluorocarbon and/or chlorofluorocarbon heat transfer fluid. In general, as noted above, it is preferred that lubricants according to this invention have International Organization for Standardization ("ISO") viscosity grade numbers between 15 and 320. The viscosity ranges for some of the ISO viscosity grade numbers are given in Table 1.

**TABLE 1**

| | Viscosity Range in mm²/s | |
|---|---|---|
| ISO Viscosity Grade Number | (Centistokes) at 40°C | |
| | Minimum | Maximum |
| 2 | 1.98 | 2.42 |
| 3 | 2.88 | 3.53 |
| 5 | 4.14 | 5.06 |
| 7 | 6.12 | 7.48 |
| 10 | 9.00 | 11.0 |
| 15 | 13.5 | 16.5 |
| 22 | 19.8 | 24.2 |
| 32 | 28.8 | 35.2 |
| 46 | 41.4 | 50.6 |
| 68 | 61.2 | 74.8 |
| 100 | 90.0 | 110. |
| 150 | 135. | 165. |
| 220 | 198. | 242. |
| 320 | 288. | 352. |
| 460 | 414. | 506. |
| 680 | 612. | 748. |
| 1000 | 900. | 1100. |
| 1500 | 1350. | 1650. |

The preparation of ester lubricant base stocks used in the invention is described in further detail in the following examples.

### General Ester Synthesis Procedure

The alcohol and acid to be reacted, together with a suitable catalyst such as dibutyltin diacetate, tin oxalate, phosphoric acid, and/or tetrabutyl titanate, were charged into a round bottomed flask equipped with a stirrer, thermometer, nitrogen sparging means, condenser, and a recycle trap. Acid was charged in about 15% molar excess over the alcohol. The amount of catalyst was from 0.02 to 0.1% by weight of the weight of the total acid and alcohol reacted.

The reaction mixture was heated to a temperature between about 220 and 230°C, and water from the resulting reaction was collected in the trap while refluxing acids were returned to the reaction mixture. Partial vacuum was maintained above the reaction mixture as necessary to achieve a reflux.

The reaction mixture was sampled occasionally for determination of hydroxyl number, and after the hydroxyl number had fallen below 5.0 mg of KOH per gram of mixture, the majority of the excess acid was removed by distillation after applying the highest vacuum obtainable with the apparatus used, while lowering the temperature to about 190°C. The reaction mixture was then cooled, and any residual acidity was removed, if desired, by treatment with lime, sodium hydroxide, or epoxy esters. The resulting lubricant or lubricant base stock was dried and filtered before blending and phase compatibility testing.

### Example 1

### General Procedure for Aluminum Wear Testing of Esters

The esters were tested for aluminum wear in a compressor which is a part of refrigeration equipment. The compressor is operated continuously for 240 hours or until the test was determined to have been a failure. Shortly before the test, a mineral break-in oil containing zinc dithiophosphate was flushed from the compressor.

### Examples of Specific Ester Base Stocks Tested

Examples of esters of the present invention and esters which do not embody the invention (i.e., "comparative esters") and results for aluminum wear and in some instances, acid value for such ester lubricants are set forth in the following Table 2.

As can be seen from the data in Table 2, the ester lubricant of this invention exhibits strikingly superior aluminum wear results. More specifically, as noted in Table 2, the ester lubricant of the invention in a compressor operated for 240 hours contained only 4 ppm aluminum and passed the test. In contrast, the Example A and B comparative lubricants contained more than 500 times as much aluminum after 20-30 hours of operation of a compressor. Comparative Example lubricants C and D contained 57 ppm and 112 ppm aluminum after 20-30 hours of operation of a compressor. The data for Comparative Example E was incomplete, but it appeared that Example E may have passed the test. As noted in footnote 5, the ester of comparative Example E was compounded with an antiwear agent, unlike the ester of the invention which as noted above did not require compounding with an anti-wear agent to pass the test

The ester lubricant used in the invention identified in footnote 1 herebelow was also measured for acid value ("AV") and found to have a value of 0.011. Corrosion resulting from such an ester would be negligible.

**TABLE 2**

| | Ester Lubricant of Invention ¹ | Comparative Example A² | Comparative Example B² |
|---|---|---|---|
| Hours | 240 | 20-30 | 20-30 |
| Aluminum, ppm | 4 | >2000 | >2000 |
| AV | 0.011 | - | - |

| | Comparative Example C³ | Comparative Example D⁴ | Comparative Example E⁵ |
|---|---|---|---|
| Hours | 20-30 | 15-30 | May Have Passed |
| Aluminum ppm | 57 | 112 | |
| AV | 0.045 | 0.076 | |

| | | | |
|---|---|---|---|
| Footnotes 1. Ester blend formed from monopentaerythritol and an acid mixture of 19.95% weight percent of a mixture of 2-methylbutanoic acid and 3-methylbutanoic acid (on the order of 99% being 2-methylbutanoic acid), 37.05 weight percent n-pentanoic acid and 43.00 weight percent isononanoic acid 2. Ester formed from monopentaerythritol and an acid mixture of 7.00 weight percent adipic acid, 60.45 weight percent n-pentanoic acid and 32.55 weight percent isopentanoic acid. 3. Ester formed from 75.0 weight percent techpentaerythritol and 25.0 weight percent dipentaerythritol and an acid mixture of 48.5 weight percent n-pentanoic acid, 9.6 weight percent n-hexanoic acid, 10.7 weight percent n-heptanoic acid 14.8 weight percent n-octanoic acid, 8.4 weight percent n-nonanoic acid and 7.6 weight percent n-decanoic acid. 4. Ester formed from monopentaerythritol and an acid mixture of 60 weight percent n-heptanoic acid, 19 weight percent isooctanoic acid and 21 weight percent isononanoic acid. 5. Lubricant of Composition Example D compounded with an anti-wear additive (ICI Emkarate® RL 32 CF). | | | |

### Example 2

The procedure for aluminum wear testing set forth in Example 1 was repeated except that the test was allowed to continue for an extended period with measurements taken after approximately 400 hours. Aluminum wear results were recorded as before. A pass for this test is 5 ppm or less. In addition concentrations of iron, copper and silicon and moisture were also measured, along with total acid number ("TAN").

As can be seen from the data in Table 3, the ester lubricant of the invention exhibits strikingly superior aluminum wear and other properties. In fact, the ester lubricant of the invention was the only lubricant to pass the aluminum wear test.

**TABLE 3**

| | Ester Lubricant of Invention | Comparative Example D⁷ | Comparative Example F⁶ |
|---|---|---|---|
| Hours | 426 | 401 | 420 |
| Aluminum ppm | 1 | 16 | 34 |
| Iron ppm | 0 | 6 | 175 |
| Copper ppm | 0 | 0 | 4 |
| Silicon. ppm | 7 | 6 | 15 |
| Moisture ppm | 13 | 24 | 11 |
| TAN | 0.02 | 0.04 | Black |

| | | | |
|---|---|---|---|
| 6. Ester blend formed from a polyol mixture of 89.39 weight percent monopentaerythritol, 7.47 weight percent dipentaerythritol and 0.64 weight percent tripentaerythritol with the remaining 3.46 weight percent believed to be one of the above polyols and an acid mixture of 0.43 weight percent n-butanoic acid, 9.57 weight percent of a 2-methylbutanoic acid and 3-methylbutanoic acid mixture, 20.93 weight percent n-pentanoic acid, 0.77 weight percent n-hexanoic acid, 41.35 weight percent n-heptanoic acid, 1.16 weight percent n-octanoic acid, 24.91 weight percent n-nonanoic acid, 0.51 weight percent-decanoic acid, 0.11 weight percent n-undecanoic acid, 0.08 weight percent lauric acid, and 0.21 weight percent unknown acid. 7. See footnote 4 to Table 2. | | | |

## Claims

1. A method of alleviating wear on aluminum surfaces in refrigeration equipment during the operation of the refrigeration equipment which comprises contacting the equipment with a lubricant composition that is not blended with anti-wear additives, said lubricant composition comprising an ester formed from at least one alcohol selected from the group consisting of monopentaerythritol, dipentaerythritol and tripentaerythritol and a carboxylic acid mixture comprising, in percent by weight, 40-60 percent isononanoic acid and 40-60 percent of a source of pentanoic acid selected from the group consisting of 2-methylbutanoic acid, 3-methylbutanoic acid and n-pentanoic acid.

2. The method according to claim 1 wherein the alcohol component in the lubricant composition used in carrying out the method comprises 85-90 weight percent monopentaerythritol, 10-15 weight percent dipentaerythritol and 0-3 weight percent tripentaerythritol.

3. The method according to claim 1 wherein the ester lubricant composition used in carrying out the method has an iso viscosity grade number between 22 and 46.

4. The method according to claim 3 wherein the ester lubricant composition used in carrying out the method has an iso viscosity grade number of 32.

5. The method according to claim 1 wherein the ester lubricant composition used in carrying out the method is formed from an acid mixture that comprises as its source of pentanoic acid 60-70 percent n-pentanoic acid and 30-40 percent of a mixture of 2-methylbutanoic acid and 3-methylbutanoic acid.

6. The method according to claim 1 wherein the ester lubricant composition used in carrying out the method is formed from a carboxylic acid mixture comprising in weight percent 19.95 percent of a mixture of 2-methylbutanoic acid and 3-methylbutanoic acid, 37.05 percent n-pentanoic acid and 43.00 percent isononanoic acid.

7. The method according to claim 1 wherein the lubricant composition is a component of a refrigerant working-fluid further comprising a chlorine-free fluoro group containing heat transfer fluid.

8. A method according to claim 7 wherein the chlorine-free heat transfer fluid is selected from the group consisting of pentafluoroethane, 1,1-difluoroethane, 1,1,1-trifluoroethane, difluoromethane, 1,1,1,2-tetrafluoroethane and mixtures thereof.

9. A method according to claim 7 wherein the working fluid used in carrying out the method is selected from the group consisting of pentafluoroethane, 1,1-difluoroethane, 1,1,1-trifluoroethane, difluoromethane and 1,1,1,2-tetrafluoroethane.

10. A method according to claim 7 wherein the working fluid used in carrying out the method is 1,1,1,2-tetrafluoroethane.

11. A method according to claim 1 wherein the ester is formed from at least one alcohol selected from the group consisting of monopentaerythritol, dipentaerythritol and tripentaerythritol and a carboxylic acid mixture comprising in weight 19.95 percent of a mixture of 2-methylbutanoic acid and 3-methylbutanoic acid, 37.05 percent n-pentanoic acid and 43.00 percent isononanoic acid.

## Patentansprüche

1. Ein Verfahren zur Verringerung der Reibung von Aluminiumoberflächen in Kältemaschinen während des Betriebs der Kältemaschinen, das umfasst: das Inkontaktbringen der Maschine mit einem Schmiermittel, enthaltend eine Schmiermittelzusammensetzung, die nicht mit reibungsunterdrückenden Additiven versetzt ist, wobei die Schmiermittelzusammensetzung einen Ester enthält, der gebildet wird aus mind. einem Alkohol, ausgewählt aus der Gruppe bestehend aus Monopentaerythrit, Dipentaerythrit und Tripentaerythrit und einer Mischung von Carbonsäuren, die in Gewichtsprozent 40 bis 60 % Isononansäure und 40 bis 60 % einer Quelle von Pentansäure, ausgewählt aus der Gruppe bestehend aus 2-Methylbutansäure, 3-Methylbutansäure und n-Pentansäure enthalten.

2. Das Verfahren gemäß Anspruch 1, wobei der Alkoholteil in der Schmiermittelzusammensetzung, der in dem Verfahren benutzt wird, 85-90 Gew.-% Monopentaerythrit, 10-15 % Dipentaerythrit und 0-3 Gew.-% Tripentaerythrit enthält.

3. Das Verfahren gemäß Anspruch 1, wobei das Esterschmiermittel, welches im Verfahren eingesetzt wird, eine Iso Viskositätszahl zwischen 22 und 46 hat.

4. Das Verfahren gemäß Anspruch 3, wobei das Esterschmiermittel, das im Verfahren eingesetzt wird, eine Iso Viskositätszahl von 32 hat.

5. Das Verfahren gemäß Anspruch 1, wobei das Esterschmiermittel, das im Verfahren eingesetzt wird, gebildet wird aus einer Säuremischung, die eine Quelle von Pentansäure in Mengen von 60 bis 70 % n-Pentansäure und 30-40 % einer Mischung aus 2-Methylbuthansäure und 3-Methylbuthansäure enthält.

6. Das Verfahren gemäß Anspruch 1, wobei das Esterschmiermittel zur Benutzung des Verfahrens gebildet wird aus einer Carbonsäuremischung mit 19,95 Gew.% einer Mischung aus 2-Methylbutansäure und 3-Methylbutansäure, 37,05 % n-Pentansäure und 43,00 % Isononansäure.

7. Das Verfahren gemäß Anspruch 1, wobei die Schmiermittelzusammensetzungen Teil einer Wärmeübertragungsflüssigkeit für Kühlaggregate sind und eine chlorfreie, Fluor-Gruppen enthaltende Wärmeübertragungsflüssigkeit enthält.

8. Ein Verfahren gemäß Anspruch 7 wobei die chlorfreie Wärmeübertragungsflüssigkeit ausgewählt ist aus der Gruppe bestehend aus Pentafluorethan, 1,1-Difluorethan, 1,1,1-Trifluorethan, Difluoromethan, 1,1,1,2-Tetrafluroethan und deren Mischungen.

9. Ein Verfahren gemäß Anspruch 7, wobei die Wärmeübertragungsflüssigkeit, die im Verfahren eingesetzt wird, ausgewählt ist aus der Gruppe bestehend aus Pentafluorethan, 1,1-Difluorethan, 1,1,1-Trifluorethan, Difluoromethan und 1,1,1,2-Tetrafluroethan.

10. Ein Verfahren gemäß Anspruch 7, wobei die Wärmeübertragungsflüssigkeit, die im Verfahren verwendet wird, ausgewählt ist aus 1,1,1,2- Tetrafluroethan.

11. Ein Verfahren gemäß Anspruch 1, worin der Ester gebildet wird aus mind. einem Alkohol ausgewählt aus der Gruppe bestehend aus Monopentaerythrit, Dipentaerythrit und Tripentaerythrit und einer Carbonsäuremischung, enthaltend in Gew.-% 19,5 einer Mischung aus 2-Methylbuthansäure und 3-Methylbuthansäure, 37,05 % n-Pentansäure und 43,00 % Isononansäure.

## Revendications

1. Procédé d'atténuation de l'usure sur des surfaces d'aluminium dans un équipement de réfrigération pendant l'utilisation de l'équipement de réfrigération, qui comprend la mise en contact de l'équipement avec une composition lubrifiante qui n'est pas mélangée avec des additifs anti-usure, ladite composition lubrifiante comprenant un ester formé à partir d'au moins un alcool choisi dans le groupe constitué par le monopentaérythritol, le dipentaérythritol et le tripentaérythritol et d'un mélange d'acides carboxyliques comprenant, en pourcentage en poids, 40 à 60 pourcent d'acide isononanoïque et 40 à 60 pourcent d'une source d'acide pentanoïque choisie dans le groupe constitué par l'acide 2-méthylbutanoïque, l'acide 3-méthylbutanoïque et l'acide n-pentanoïque.

2. Procédé selon la revendication 1, dans lequel le composant alcool dans la composition lubrifiante utilisée pour réaliser le procédé comprend 85 à 90 pourcent en poids de monopentaérythritol, 10 à 15 pourcent en poids de dipentaérythritol et 0 à 3 pourcent en poids de tripentaérythritol.

3. Procédé selon la revendication 1, dans lequel la composition lubrifiante d'ester utilisée pour réaliser le procédé a un indice de viscosité iso compris entre 22 et 46.

4. Procédé selon la revendication 3, dans lequel la composition lubrifiante d'ester utilisée pour réaliser le procédé a un indice de viscosité iso de 32.

5. Procédé selon la revendication 1, dans lequel la composition lubrifiante d'ester utilisée pour réaliser le procédé est formée à partir d'un mélange d'acides qui comprend en tant que source d'acide pentanoïque 60 à 70 pourcent d'acide n-pentanoïque et 30 à 40 pourcent d'un mélange d'acide 2-méthylbutanoïque et d'acide 3-méthylbutanoïque.

6. Procédé selon la revendication 1, dans lequel la composition lubrifiante d'ester utilisée pour réaliser le procédé est formée à partir d'un mélange d'acides carboxyliques qui comprend en pourcentage en poids 19,95 pourcent d'un mélange d'acide 2-méthylbutanoïque et d'acide 3-méthylbutanoïque, 37,05 pourcent d'acide n-pentanoïque et 43,00 pourcent d'acide isononanoïque.

7. Procédé selon la revendication 1, dans lequel la composition lubrifiante est un composant d'un fluide de travail réfrigérant qui comprend également un fluide de transfert de chaleur contenant un groupe fluoro sans chlore.

8. Procédé selon la revendication 7, dans lequel le fluide de transfert de chaleur sans chlore est choisi dans le groupe constitué par le pentafluoroéthane, le 1,1-difluoroéthane, le 1,1,1-trifluoroéthane, le difluorométhane, le 1,1,1,2-tétrafluoroéthane et leurs mélanges.

9. Procédé selon la revendication 7, dans lequel le fluide de travail utilisé pour réaliser le procédé est choisi dans le groupe constitué par le pentafluoroéthane, le 1,1-difluoroéthane, le 1,1,1-trifluoroéthane, le difluorométhane et le 1,1,1,2-tétrafluoroéthane.

10. Procédé selon la revendication 7, dans lequel le fluide de travail utilisé pour réaliser le procédé est le 1,1,1,2-tétrafluoroéthane.

11. Procédé selon la revendication 1, dans lequel l'ester est formé à partir d'au moins un alcool choisi dans le groupe constitué par le monopentaérythritol, le dipentaérythritol et le tripentaérythritol et d'un mélange d'acides carboxyliques comprenant en poids 19,95 pourcent d'un mélange d'acide 2-méthylbutanoïque et d'acide 3-méthylbutanoïque, 37,05 pourcent d'acide n-pentanoïque et 43,00 pourcent d'acide isononanoïque.
